Europäisches Patentamt

European Patent Office

Office européen des brevets

(19)

(11) **EP 1 164 689 A2**

(12) **EUROPEAN PATENT APPLICATION**

(43) Date of publication:
**19.12.2001 Bulletin 2001/51**

(51) Int Cl.⁷: **H02M 1/00**, H02M 7/155

(21) Application number: **01650072.0**

(22) Date of filing: **13.06.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **16.06.2000 IE 000489**

(71) Applicant: **FORFAS, (trading as PEI Technologies)**
**Dublin 2 (IE)**

(72) Inventors:
• **O'Sullivan, Dara, Pei Technologies**
  **Cork (IE)**
• **Egan, Michael, Pei Technologies**
  **Cork (IE)**
• **Willers, Michael, Pei Technologies**
  **Cork (IE)**

(74) Representative: **Weldon, Michael James et al**
**c/o John A. O'Brien & Associates, Third Floor,**
**Duncairn House, 14 Carysfort Avenue**
**Blackrock, Co. Dublin (IE)**

(54) **A single stage ac/dc converter**

(57) An ac/dc converter (1) has a closed loop controller (3) to maintain a well regulated output voltage $(V_o)$ with low peak-to-peak ripple. A resonant capacitor $(C_{in})$ across the rectifier bridge $(D_{R1}-D_{R4})$, and a resonant inductor $(L_R)$ between the bridge and the isolation transformer provide inherent power factor correction. A clamping diode $(D_{CL})$ is connected between the dc rectifier bridge positive terminal and the bulk capacitor $(C_B)$. There is also a second resonant capacitor $(C_t)$ across the isolation transformer. There is zero voltage switching of the power switches $(Q1, Q2)$.

Fig. 1  Circuit Diagram

EP 1 164 689 A2

**Description**

INTRODUCTION

Field of the Invention

The invention relates to an ac/dc converter of the type comprising:

a dc rectifier bridge;

a primary side energy storage bulk capacitor;

half-bridge inverter switches;

an isolation transformer;

a dc blocking capacitor for removing dc components from transformer current;

output rectifier diodes for rectifying transformer secondary ac voltage; and

an inductive/capacitive output filter for removing ac high frequency ripple from rectified transformer secondary voltage.

Prior Art Discussion

Heretofore, much development work has been carried out to limit the low frequency harmonic content of the ac input current in ac/dc power supplies. One approach involved adaptation of standard dc/dc converters such as the boost, flyback, SEPIC or resonant converters to provide a near-sinusoidal input current. The main drawback of this method is that the difference between the sine squared input power and the dc output requirement results in a significant twice line frequency voltage ripple across the output capacitor. In certain applications - such as battery chargers - this ripple is acceptable. However most applications require a well-regulated dc output voltage. This necessitates the employment of a second stage, resulting in the power being processed twice. This can be inefficient and costly at low output power levels.

This drawback led to attempts to combine the power factor correction and the output voltage regulation in a single stage. While these single-stage converters have some advantages, they usually suffer from high switch and/or bulk capacitor stresses. More recently, converters that combine these two approaches have been proposed. These converters process most of the power once and the remainder twice, so that any line frequency ripple is compensated by the two-stage process, while the efficiency is improved by processing the majority of the power only once.

While these approaches are effective at drawing a near-sinusoidal current at the input line, the cost of achieving this is significant because of the large number of components involved and their potentially high voltage ratings, as well as often-complex control structures. In addition, many of the existing topologies are hard switched. This places a limit on the maximum attainable switching frequency and thus on the converter size reduction that is possible.

Therefore, the invention is directed towards providing an ac/dc converter which incorporates power factor correction and close output voltage regulation in a single stage, without incurring the drawbacks of very high voltage stress and complex converter control. Furthermore, a converter that achieves soft switching of the inverter switches is desirable, since this will enable an increase in the switching frequency and consequent reduction in converter size.

SUMMARY OF THE INVENTION

The invention is characterised in that:

the converter further comprises a first resonant capacitor connected across the dc rectifier bridge, and a resonant inductor connected between the dc rectifier bridge positive terminal and the isolation transformer negative terminal,

the converter further comprises a clamping diode connected between the dc rectifier bridge positive terminal and a positive terminal of the bulk capacitor, and

the converter further comprises a second resonant capacitor connected across the isolation transformer in series with the first resonant capacitor and the resonant inductor.

In one embodiment, the bulk capacitor value is such that the voltage potential on this capacitor does not vary substantially over the ac line cycle.

In another embodiment, the converter component values are such that the bulk capacitor potential is maintained below 500V.

In a further embodiment, values of the first resonant capacitor, of the resonant inductor and of the second resonant capacitor are such that the voltage on the first resonant capacitor is clamped at the level of the ac line voltage over a sufficient portion of the ac line cycle to provide a power factor of at least 0.9.

In one embodiment, the converter further comprises an output voltage control loop comprising means for dynamically comparing instantaneous output voltage with a target voltage to generate a control signal.

In a further embodiment, the control loop comprises comparator compensation components for scaling comparator differences such that the output voltage is restored to its regulated value within a time in the region of 0.2 to 1.0 ms.

In one embodiment, the control loop control signal adjusts the switching frequency of the half bridge inverter switches in response to regulation and load change requirements.

In another embodiment, the control loop comprises means for limiting the control signal within a range such that zero-voltage turn-on of the half bridge inverter switches is obtained.

In one embodiment, the control signal adjusts both the switching frequency and duty cycle of the half bridge inverter switches in response to regulation and load change requirements.

DETAILED DESCRIPTION OF THE INVENTION

Brief Description of the Drawings

The invention will be more clearly understood from the following description of some embodiments thereof given by way of example only with reference to the accompanying drawings in which:-

Fig. 1 is a circuit diagram of an ac/dc converter;

Fig. 2 is a plot of waveforms;

Fig. 3 is an equivalent circuit of the converter;

Fig. 4 is a plot of equivalent circuit waveforms;

Fig. 5 is an equivalent circuit for an unclamped mode of operation;

Fig. 6 is a plot of converter output characteristics;

Fig. 7 is a set of plots illustrating variation in average output voltage;

Fig. 8 is a small-signal model of the converter;

Fig. 9 is a block diagram representation of the control loop;

Fig. 10 is a plot of output voltage ripple;

Figs. 11(a) and 11(b) are plots illustrating output voltage transient responses to step changes in load current;

Fig. 12 is a set of plots of average output current vs switching frequency;

Fig. 13 is a set of plots of RMS inductor current vs output current;

Fig. 14 is a plot of input current and voltage over a line cycle; and

Fig. 15 is a plot of input current harmonics and Class A limits.

Description of the Embodiments

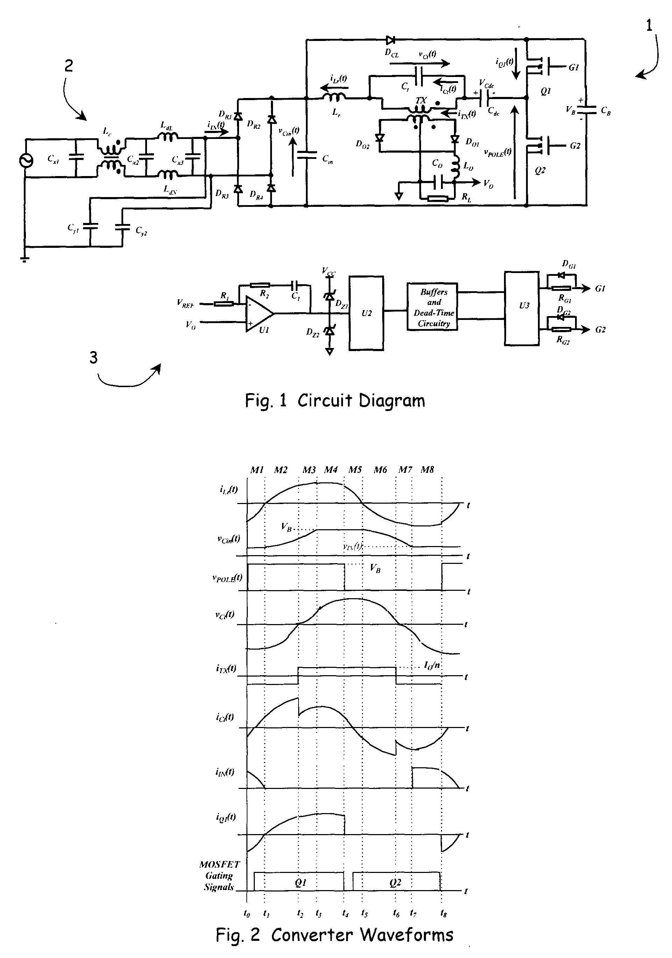

Referring to the drawings, an ac/dc converter 1 is shown in Fig. 1. The converter 1 comprises a bulk capacitor $C_B$, half-bridge inverter switches $Q1$ and $Q2$, resonant components $L_r$, $C_{in}$ and $C_t$, clamp diode $D_{CL}$, dc blocking capacitor $C_{dc}$, isolation transformer $TX$ with primary to secondary turns ratio $n$:1, output rectifier diodes $D_{O1}$ and $D_{O2}$, output filter components $L_O$ and $C_O$, load resistance $R_L$, an EMI filter consisting of $C_{x1}$, $C_{x2}$, $C_{x3}$, $C_{y1}$, $C_{y2}$, $L_c$, $L_{dL}$ and $L_{dN}$ and a dc rectifier bridge $D_{R1}/D_{R2}/D_{R3}/D_{R4}$. The dc output voltage $V_O$ is provided at a terminal between $L_O$ and $R_L$, and a feedback connection is made to a closed loop control circuit 3. The latter controls the half bridge inverter switches $Q1$ and $Q2$ to control $V_O$ to be close to a target output voltage $V_{REF}$.

In more detail, the following table sets out the important component values.

| Component | Value | Component | Value |
|---|---|---|---|
| $L_r$ | 105μH | $C_O$ | 9.4mF |
| $C_{in}$ | 127nF | $L_O$ | 2.32μH |
| $C_t$ | 88nF | $R_1$ | 10kΩ |
| $TX$ | 17:1 | $R_2$ | 0.82kΩ |
| $C_{dc}$ | 1μF | $C_1$ | 15nF |
| $C_B$ | 330μF | $D_{Z1}$ | 10V Zener diode |
| $R_{G1},R_{G2}$ | 5.6Ω | $D_{Z2}$ | 7.5V Zener diode |

The circuit waveforms are shown in Fig. 2. The voltage on the bulk capacitor is slightly higher than the peak of the ac line voltage, but is still low enough to enable the use of a standard 500V electrolytic capacitor, even at a line voltage of 264Vac. This voltage is essentially constant apart from a small twice line frequency ripple (typically a few volts). The half-bridge switches - which are driven at 50% duty cycle - generate a square wave voltage waveform, $v_P$(t). This oscillating voltage drives the series-parallel resonant circuit consisting of $L_r$, $C_{in}$ and $C_t$, and the voltage and current waveforms follow the trajectories described below. The instantaneous input voltage, $v_{IN}$, is assumed constant over the switching cycle. The polarities of the currents and voltages are as indicated in Fig. 1. The output current can be approximated as a constant since the output filter is designed to minimise output current ripple. The reflected output current is represented as $I_O/n$.

The operation of the converter can be divided into eight modes (M1-M8) which are now described:

**M1:** The beginning of this mode corresponds to the dead time subsequent to the switch $Q2$ being turned off. The inductor current is negative and flows through the upper switch anti-parallel diode and into the bulk capacitor. The resonant capacitor, $C_{in}$ clamped at the input voltage level and so the inductor current is drawn directly from the ac line through the input rectifier diodes. The voltage across the dc blocking capacitor, $C_{dc}$ is always in the direction indicated in Fig. 1 and can be shown to be approximately equal to half the instantaneous rectified input voltage. The transformer primary current - which equals the reflected load current - is negative since the primary voltage - which equals $v_{Ct}$(t) - is negative. Thus, in this mode $L_r$ and $C_t$ form a parallel resonant circuit, with a current source load connected in parallel with $C_t$. The voltage across the inductor, $v_{Lr}$(t), is equal to:

$$v_{Lr}(t) = V_B - \frac{v_{IN}}{2} - v_{Ct}(t). \tag{1}$$

This is a positive voltage, and so the inductor current resonates towards zero. The upper switch, $Q1$, is turned on under ZVS conditions during this mode.

**M2:** When the inductor current reaches zero, the input diodes stop conducting and the inductor current transfers to $C_{in}$, flowing now in a positive direction. During this mode, $L_r$, $C_{in}$ and $C_t$ form a series-parallel resonant circuit with a current source load. The inductor voltage is:

$$v_{Lr}(t) = V_B + \frac{v_{IN}}{2} - v_{Ct}(t) - v_{Cin}(t). \tag{2}$$

Once again, this is a positive voltage. $v_{Cin}$(t) resonates towards $V_B$ and $v_{Ct}$(t) resonates towards zero. This mode ends when $v_{Cin}(t)$ clamps to $V_B$ or $v_{Ct}(t)$ reaches zero, whichever occurs first. In this case, it is assumed that the latter occurs first.

**M3:** When $v_{Ct}(t)$ reaches zero and becomes positive, the secondary diode $D_{O2}$ becomes reverse biased and the output current $I_O$, transfers to $D_{O1}$ causing the transformer primary current to reverse. The resonant circuit and inductor voltage are the same as in *M2*.

**M4:** When $v_{Cin}(t)$ reaches $V_B$, the clamp diode $D_{CL}$ conducts and clamps $v_{Cin}(t)$ at this level. A parallel resonant circuit with current source load is now formed by $L_r$, $C_t$ and the reflected output current. The inductor voltage is:

$$v_{Lr}(t) = \frac{v_{IN}}{2} - v_{Ct}(t) \tag{3}$$

which may be positive or negative. Thus the inductor current may increase or decrease during this mode, depending on $v_{IN}$.

**M5:** When $Q1$ turns off, the inductor current transfers from the upper switch to the lower MOSFET antiparallel diode and the pole voltage drops to approximately zero volts. The parallel resonant circuit is now driven by a voltage:

$$v_{Lr}(t) = -\left(V_B - \frac{v_{IN}}{2}\right) - v_{Ct}(t) \tag{4}$$

which is a negative voltage, resulting in a decrease in inductor current.

**M6:** When the inductor current reaches zero, the clamp diode $D_{CL}$ stops conducting and the inductor current transfers to $C_{in}$. A series-parallel resonant circuit is again formed by $L_r$, $C_{in}$ and $C_t$. The inductor voltage is:

$$v_{Lr}(t) = \frac{v_{IN}}{2} - v_{Ct}(t) - v_{Cin}(t) \tag{5}$$

**M7:** When $v_{Ct}(t)$ reaches zero, the transformer primary current reverses, changing the loading effect on the resonant circuit of M6.

**M8:** When $v_{Cin}(t)$ reaches the instantaneous input voltage level, the rectifier diodes conduct and all of the inductor current is drawn from the ac line. The input capacitor voltage is clamped at this level and $L_r$ and $C_t$ form a parallel resonant circuit. The inductor voltage is:

$$v_{Lr}(t) = - \frac{v_{IN}}{2} - v_{Ct}(t). \tag{6}$$

Two important features can be observed from the circuit waveforms:

1. The voltage on $C_{in}$ resonates between the instantaneous input voltage, $v_{IN}$ -which is assumed constant over a switching cycle - and the bulk capacitor voltage, $V_B$ - assumed constant over the line cycle. The voltage is clamped at these levels by the rectifier diodes (during modes M1 and M8) and the clamp diode (during modes M4 and M5) respectively, as shown in Fig. 2. Thus current is always drawn from the ac line during M1 and M8 giving this circuit its power factor correction potential. As $v_{IN}$ increases, the resonant swing between $v_{IN}$ and $V_B$ decreases and so the clamping modes take up a larger proportion of the switching cycle. Thus the average input current increases with input voltage, which is ideal for PFC operation.

2. A high frequency, approximately sinusoidal voltage is generated on $C_t$, which is rectified and filtered to give a constant output voltage. Output current control is achieved by varying the switching frequency. The presence of $C_t$ in parallel with the transformer also allows for no-load operation, since all of the circulating current can be shunted through this capacitor at no-load.

At higher switching frequencies and lower instantaneous input voltages another operating condition exists, in which the input clamping modes (M1 and M8 in Fig. 2) disappear and no current is drawn from the ac line. The input voltage and the switching frequency are such that $v_{Cr}(t)$ can only transition from the bulk voltage level to a voltage level which is higher than the input voltage, and hence no clamping at the input voltage takes place. During this mode of operation the circuit is essentially disconnected from the ac line and all of the output power is supplied from the bulk capacitor. This occurs only near the cusps of the ac line cycle when the instantaneous input voltage is low or for light load conditions.

Differential equations can be used to describe each of the modes shown in Fig. 2. However, this approach is very complex and does not give an intuitive understanding of the overall operation of the converter. In resonant circuits that are operated above resonance, Fundamental Mode Approximation (FMA) analysis is often used. However, this analytical method can be rather inaccurate. A superior approach is to use the recently introduced Rectifier Compensated Fundamental Mode Approximation (RCFMA) method, which accounts for the effect of the resonant swing angles on the voltage across $C_{in}$, yielding a more accurate representation of the circuit.

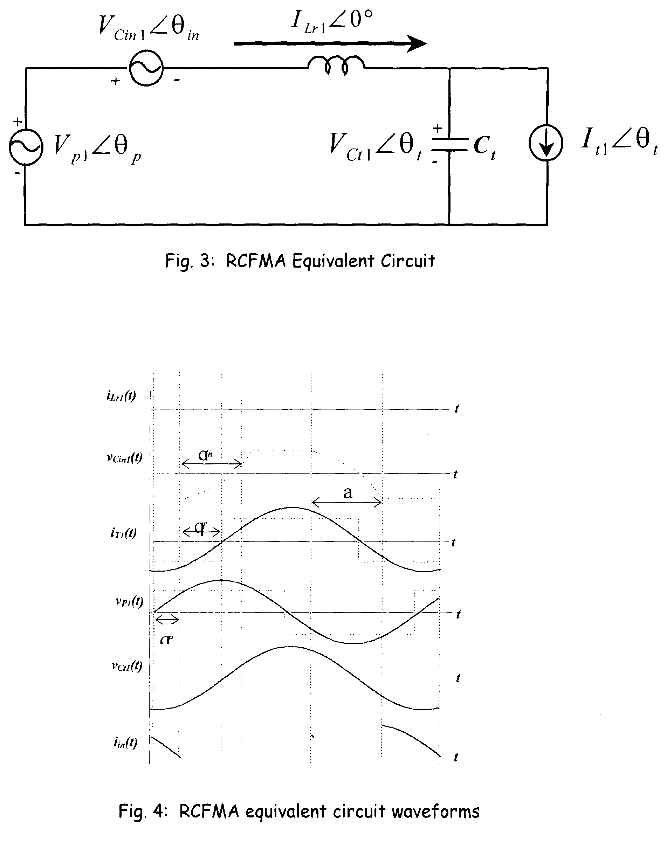

The RCFMA equivalent circuit for this topology is shown in Fig. 3 for the normal mode of operation (i.e. input capacitor voltage clamps to $v_{IN}$). The half-bridge pole voltage, the transformer current, and the input capacitor voltage are all approximated by sinusoidal voltage and current sources at the switching frequency, the amplitudes of which ($V_{p1}$, $I_{t1}$, and $V_{Cin1}$ respectively) are equal to the fundamental amplitudes of these voltages and currents. Assuming negligible switching frequency ripple in the dc blocking capacitor, this component can be neglected from the equivalent circuit of Fig. 3.

The circuit voltages and currents and their respective phase angles are shown in Fig. 4. The fundamental component of the inductor current is designated as the reference phasor. The transformer current fundamental, $I_{t1}$, and the transformer capacitor voltage fundamental, $V_{Ct1}$, are assumed to be in phase since this converter operates mainly in the continuous capacitor voltage mode.

The magnitudes of $I_{t1}$, $V_{p1}$ and $V_{Cin1}$ are derived from the Fourier analysis of the waveforms which they represent. Since $i_{TX}(t)$ and $v_{POLE}(t)$ are square waves, their fundamental magnitudes are straightforward to derive. Hence:

$$V_{p1} = \frac{2V_B}{\pi} \qquad (7)$$

$$I_{t1} = \frac{4I_O}{n\pi} \qquad (8)$$

where all voltages and currents are peak amplitudes.

In order to accurately determine the fundamental magnitude and phase of $V_{Cin}$, the resonant swing angle, $\alpha$, must be known. There is no closed form solution for the resonant swing period (M2 and M3 in Fig. 2). Thus, $\alpha$ is varied from $0°$ to $180°$ and the circuit characteristics determined at each value of $\alpha$. The Fourier coefficients of the input capacitor voltage, $A_{VCin1}$ and $B_{VCin1}$ can then be determined as functions of $\alpha$, $V_B$ and $v_{IN}$.

$$A_{VCin1} = \frac{V_B - v_{IN}}{2\pi} \left[ \frac{\sin 2\alpha - 2\alpha}{1 - \cos \alpha} \right] \qquad (9)$$

$$B_{VCin1} = \frac{V_B - v_{IN}}{\pi} [1 + \cos \alpha]. \qquad (10)$$

The fundamental magnitude of $V_{Cin}$ is then calculated as

$$V_{Cin1} = \sqrt{A_{Vcin1}^2 + B_{Vcin1}^2}. \qquad (11)$$

The resonant swing angle is also used to determine the inductor current fundamental magnitude, $I_{Lr1}$, since all of the inductor current flows into $C_{in}$ during the resonant swing mode.

$$I_{Lr1} = \frac{\omega_S C_{in} (V_B - v_{IN})}{1 - \cos \alpha} \tag{12}$$

where $\omega_S$ is the radian switching frequency.
Using simple network analysis, the equivalent circuit of Fig. 3 can then be described by the following phasor equations:

$$V_{p1} \cos \theta_p + jV_{p1} \sin \theta_p - V_{Cin1} \cos \theta_{in} - jV_{Cin1} \sin \theta_m - V_{Ct1} \cos \theta_t - jV_{Ct1} \sin \theta_t - j\omega_S L_r I_{Lr1} = 0 \tag{13}$$

$$I_{t1} \cos \theta_t + jI_{t1} \sin \theta_t - \omega_S C_t V_{Ct1} \sin \theta_t + j\omega_S C_t V_{Ct1} \cos \theta_t - I_{Lr1} = 0 \tag{14}$$

Equating real and imaginary parts and manipulating the resultant equations leads to a single equation in a single unknown, $V_{Ct1}$.

$$\left( V_{Cin1}\cos\theta_{in} + \frac{V_{Ct1}\sqrt{I_{Lr1}^2 - \omega_S^2 C_t^2 V_{Ct1}^2}}{I_{Lr1}} \right)^2 + \left( V_{Cin1}\sin\theta_{in} - \frac{\omega_S C_t V_{Ct1}^2}{I_{Lr1}} + \omega_S L_r I_{Lr1} \right)^2 - V_{p1}^2 = 0 \tag{15}$$

Although somewhat complex, this equation yields a closed form solution for $V_{Ct1}$. Equations for average output voltage and average input and output current can then be derived as functions of the swing angle, $\alpha$, $V_{Ct1}$ and $I_{Lr1}$, with the switching frequency as a parameter,

$$I_O = \frac{n\pi}{4} \sqrt{I_{Lr1}^2 - \omega_S^2 C_t^2 V_{Ct1}^2} \tag{16}$$

$$V_{OAV} = \frac{2V_{Ct1}}{n\pi} - V_D \tag{17}$$

$$I_{in} = \frac{I_{Lr1}}{2\pi}[1+\cos\alpha] \tag{18}$$

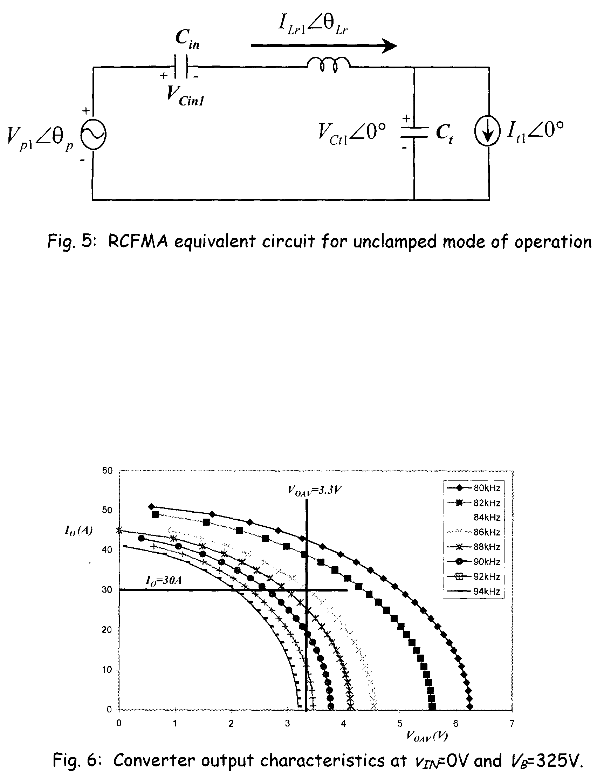

where $V_D$ represents the average voltage drop across one of the output Schottky diodes.
Similar equations are derived for the unclamped mode of operation. The RCFMA equivalent circuit for this mode is depicted in Fig. 5. The voltage source representing $v_{Cin}(t)$ is replaced by the capacitor, $C_{in}$. RCFMA is no longer necessary since there is no resonant swing angle, and the circuit can be analysed using the standard FMA technique. In this case, the output current, $I_O$ becomes the independent variable. It is varied over the full operating range and the other voltages and currents are evaluated as functions of $I_O$.
In this case, the transformer current, $I_{t1}$, is designated as the reference phasor, since this simplifies the analysis. Using superposition to analyse the circuit, a phasor equation can be derived for the transformer capacitor voltage:

$$\overline{V}_{Ct1} = K_V \left[ V_{p1} \cos\theta_p + j\left( V_{p1} \sin\theta_p + \frac{I_{t1}}{\omega_S C_{in}} - \omega_S L_r I_{t1} \right) \right] \tag{19}$$

where

$$K_V = \frac{-1\!\!\Big/\!\omega_S C_t}{\omega_S L_r - 1\!\!\Big/\!\omega_S C_m - 1\!\!\Big/\!\omega_S C_t} \;. \qquad (20)$$

Since the phase angle of the $V_{Ct1}$ phasor is zero,

$$V_{p1}\,\sin\theta_p + \frac{I_{t1}}{\omega_S C_{in}} - \omega_S L_r I_{t1} = 0. \qquad (21)$$

The pole voltage phase angle can then be evaluated:

$$\theta_{p1} = \sin^{-1}\!\left[\frac{I_{t1}\!\left(\omega_S L_r - \dfrac{1}{\omega_S C_{in}}\right)}{V_{p1}}\right] \qquad (22)$$

Knowing this phase angle, the fundamental voltage, $V_{Ct1}$ can be expressed as a function of $I_{t1}$ and hence as a function of $I_O$.

$$V_{Ct1} = |M_V V_{P1} \cos\theta_P| \qquad (23)$$

where

$$M_V = \frac{1}{\omega_S{}^2 L_r C_t - \dfrac{C_t + C_{in}}{C_{in}}}. \qquad (24)$$

The output voltage is then derived from $V_{Ct1}$ as shown in (17).

The equations detailed above are used to generate a set of parametric curves plotting average output current against output voltage with switching frequency as a parameter. An example of such curves is shown in Fig. 6.

It can be seen from these curves that, at a constant output voltage, the output current decreases as switching frequency increases and that full-load to no-load operation is viable within a narrow switching frequency range.

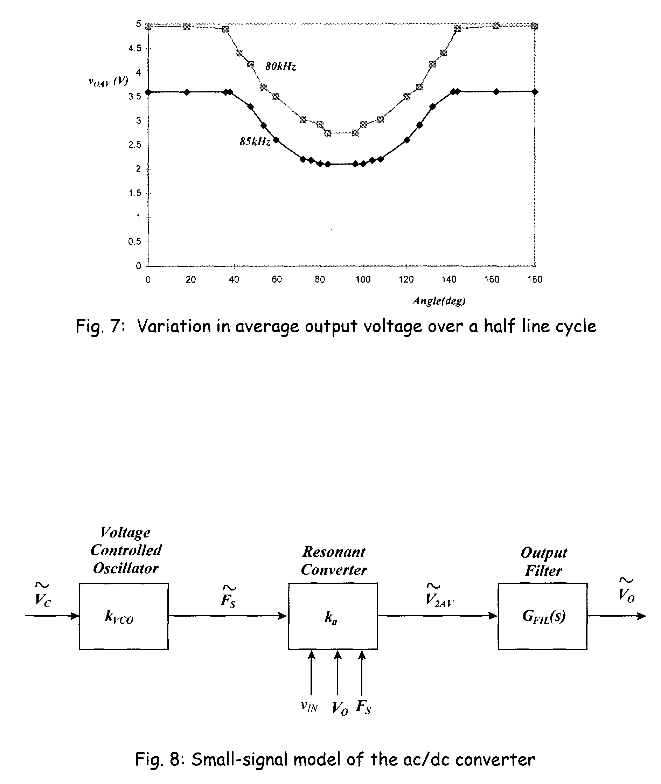

If the converter is operated at constant switching frequency, the average voltage applied to the output $LC$ filter will contain significant low frequency ripple. This is depicted in Fig. 7 where the variation in the average output voltage over a half line cycle is shown for switching frequencies of 80kHz and 85kHz and at 30A load current.

Since the output filter is designed to filter the switching ripple only, it will have little impact on the reduction of this low frequency ripple. Consequently, the switching frequency must be varied over the line cycle by the control loop in order to maintain the average output voltage constant. The control loop 3 eliminates the twice line frequency ripple that is present in the output voltage to provide a fast transient response to load changes. The ac input current is not directly controlled and power factor correction is achieved naturally.

Referring again to Fig. 1, in the control loop 3 the target output voltage is indicated as $V_{REF}$, and the switches $Q1$ and $Q2$ are controlled at $G1$ and $G2$ respectively.

It has been shown that the resonant poles of a resonant converter can be neglected if the switching frequency remains several closed loop bandwidths above the resonant peak. This assumption is applied to this converter, and it is modelled as an operating-point-dependent dc gain in series with the $LC$ output filter. The control-to-output small-signal model of the converter is depicted in Fig. 8. The quantity $V_{2AV}$ represents the average value, over the switching period, of the rectified secondary voltage.

The small-signal gain of the resonant converter, $k_a$, cannot be obtained in a closed form expression, since $V_{2AV}$ cannot be expressed directly as a function of $F_S$, and so it cannot be differentiated with respect to $F_S$. This gain must then be obtained numerically as

$$k_a = \frac{V_{OAV}(F_S + \Delta F_S) - V_{OAV}(F_S - \Delta F_S)}{2\Delta F_S} \tag{25}$$

where $F_s$ is the switching frequency at which the converter is operating, and $\triangle F_s$ is a small increment in the switching frequency.

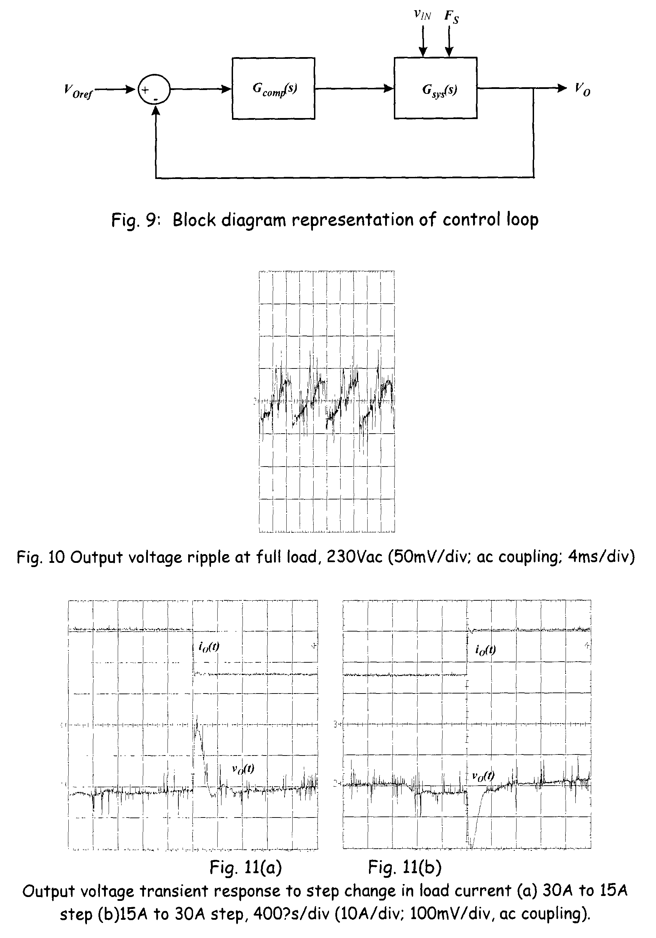

The output voltage control loop is represented in block diagram format in Fig. 9.

The system control-to-output transfer function, $G_{sys}(s)$ is described as

$$G_{sys}(s) = \frac{k_{VCO}k_a k_F (s + \omega_z)}{s^2 + 2\zeta\omega_p s + \omega_p^2} \tag{26}$$

where $k_F$, $\omega_z$, $\omega_p$ and $\zeta$ are parameters of the *LC* output filter and load. The compensator $G_{comp}(s)$ shapes the closed loop transfer function to yield the desired transient response, regulation and stability requirements. A proportional integral (PI) compensation scheme is implemented by compensation components $R_1$, $R_2$ and $C_1$, in conjunction with the operational amplifier *U1*. The output voltage is compared with the target reference voltage at the inputs of *U1*. The difference signal is scaled by the compensation circuit in such a manner that the control signal that is produced results in a closed loop response time of 0.2 to 1.0 ms, and an output voltage peak-to-peak ripple of 100mV maximum.

In this example, the control signal voltage excursion is limited within the range of 3V to 7.5V by the clamping Zener diodes $D_{Z1}$ and $D_{Z2}$. This has the effect of confining the switching frequency within a region where zero voltage turn-on of the half-bridge inverter switches is obtained. This control signal is then applied to a voltage controlled oscillator (VCO), represented by *U2,* which converts the control voltage into a square wave signal, the switching frequency of which corresponds to the control voltage amplitude. This square wave signal is then amplified and shifted by the buffers and dead-time circuitry and the half-bridge driver IC, *U3,* to render it suitable for controlling the MOSFETs. It is then applied to the gates (*G1,G2*) of *Q1* and *Q2* through the gate resistors and gate diodes, $R_{G1}, R_{G2}, D_{G1}$ and $D_{G2}$.

The full load output voltage ripple is depicted in Fig. 10 and the converter transient response is illustrated in Figs. 11(a) and 11(b).

In one example, the specifications are 3.3V, 30A output, and 85-264Vac universal input. The full-load to no-load switching frequency range is from 50kHz to approximately 100kHz. These frequency limits are determined by full-load operation at the peak of low-line condition and no-load operation at the zero crossing of high-line condition respectively. A high bandwidth control loop maintains the output voltage constant over the line cycle, minimising the low frequency ripple in the output voltage by varying the switching frequency over the line cycle.

The resonant inductor, transformer and filter inductor are wound on RM14, RM12 and RM10 cores respectively. The MOSFETs are IRF840 devices and the output rectifiers are 25V Schottky diodes. The bulk capacitor is a 500V electrolytic component and the resonant capacitors are polypropylene film capacitors.

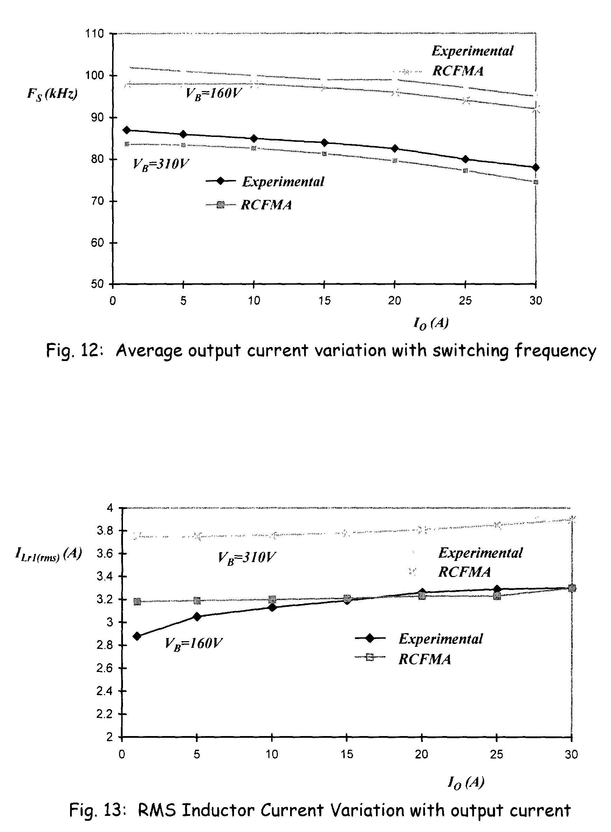

The average output current characteristics are shown in Fig. 12 at an instantaneous input voltage of 0V and for two bulk voltages of 160V and 310V (corresponding approximately to low-line and nominal-line operation respectively). The experimental results are compared with RCFMA and simulation results.

It is evident from Fig. 12 that the full-load to no-load frequency control range is quite narrow and also that the RCFMA predictions are quite accurate. The rms inductor current variation over the same load range is shown in Fig. 13. This does not vary significantly with frequency and output current- a fact which results in ZVS operation of the MOSFETs down to no-load.

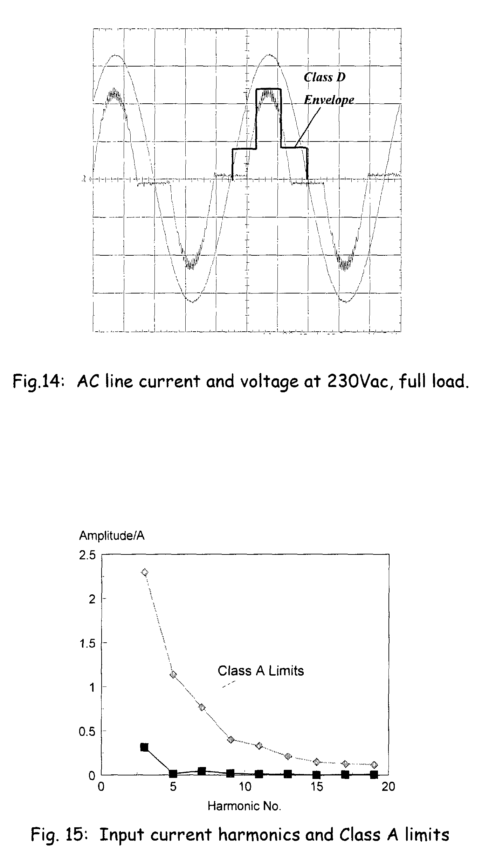

The input current and voltage over a line cycle are depicted in Fig. 14. Clearly the current is a Class A waveform since it passes outside of the Class D envelope for about 1.44ms, i.e. about 15% of the half-period (5% is the mandatory limit). The dead time near the zero crossings of the ac line voltage correspond to the mode of operation mentioned earlier where the input resonant capacitor does not clamp at the input voltage level and the converter draws no current from the ac line.

The input current low frequency harmonics at 230Vac and full load are shown in Fig. 15 where they are compared with the EN61000-3-2 Class A limits. Clearly, the converter complies with the EN61000-3-2 limits at this required test condition. The power factor at this condition is equal to 0.91, and the peak-to-peak output voltage ripple is approximately 100mV.

The ac/dc converter demonstrates an inherent power factor correction capability due to the presence of the resonant capacitor $C_{in}$. This power factor correction capability is such as to satisfy existing standards over a universal input voltage range. The topology requires the use of only two power switches and the presence of the resonant series inductor $L_r$ results in zero voltage switching of these switches. This zero voltage switching operation facilitates the use of elevated operating frequencies resulting in smaller filter components and thus increased power density for the converter.

The converter is inherently suited to low output voltage and high output current applications where low levels of ripple voltage are essential, due to the incorporation of the inductive output filter comprising $L_O$ and capacitor $C_O$. This large step-down voltage conversion process is effectively achieved in a single power processing stage.

The converter possesses the characteristic of volumetrically efficient, high voltage energy storage to achieve significant output voltage hold-up time due to the presence of the high voltage bulk capacitor $C_B$. Additionally, this capacitor also absorbs the large-signal, twice line frequency voltage ripple from the rectified mains. This high voltage bulk capacitive energy storage is achieved without the penalty of poor input current power factor operation normally associated with conventional rectifier/capacitor filters.

The circuit benefits from the use of a hybrid, variable frequency/variable phase shift control strategy for the power switches, which can be employed to reduce the switching frequency range necessary to regulate the output power.

Given the fact that the circuit achieves zero voltage switching over a wide range and that high operating frequencies can be employed, the parasitic leakage inductance of the transformer can be employed to substantially form the resonant inductor $L_r$ (in which case the capacitor $C_t$ is re-located to the secondary side of transformer, *TX*). This integrated configuration results in a highly compact and volumetrically efficient converter.

The invention is not limited to the embodiments described but may be varied in construction and detail. For example, the control signal generated by the control loop may both adjust switching frequency and also the duty cycle of the half bridge inverter switches. This is achieved by adding a sawtooth comparator to the control circuit already described, in which the control signal is compared with a sawtooth voltage waveform when the control signal rises above a predefined amplitude. The combination of a comparator and sawtooth voltage signal results in a duty cycle modulated square wave which is then applied to the half-bridge inverter switches when the control voltage lies within a given range.

**Claims**

1. An ac/dc converter comprising:

    a dc rectifier bridge ($D_{R1}$-$D_{R4}$),

    a primary side energy storage bulk capacitor ($C_B$),

    half-bridge inverter switches (*Q1*, *Q2*),

    an isolation transformer (*TX*),

    a dc blocking capacitor ($C_{dc}$) for removing dc components from transformer current,

    output rectifier diodes ($D_{O1}$, $D_{O2}$), for rectifying transformer secondary ac voltage, and

    an inductive/capacitive output filter ($L_O$, $C_O$) for removing ac high frequency ripple from rectified transformer secondary voltage;

    **characterised in that**,

    the converter further comprises a first resonant capacitor ($C_{in}$) connected across the dc rectifier bridge, and a resonant inductor ($L_r$) connected between a dc rectifier bridge positive terminal and an isolation transformer (*TX*) negative terminal,

    the converter further comprises a clamping diode ($D_{CL}$) connected between the dc rectifier bridge positive terminal and a positive terminal of the bulk capacitor ($C_B$), and

    the converter further comprises a second resonant capacitor ($C_t$) connected across the isolation transformer in series with the first resonant capacitor ($C_{in}$) and the resonant inductor ($L_r$).

2. An ac/dc converter as claimed in claim 1, wherein the bulk capacitor value is such that the voltage potential on this capacitor does not vary substantially over the ac line cycle.

3. An ac/dc converter as claimed in claim 1 and 2, wherein the converter component values are such that the bulk capacitor ($C_B$) potential is maintained below 500V.

4. An ac/dc converter as claimed in claim 3, wherein values of the first resonant capacitor ($C_{in}$), of the resonant inductor ($L_R$) and of the second resonant capacitor ($C_t$) are such that the voltage on the first resonant capacitor ($C_{in}$) is clamped at the level of the ac line voltage over a sufficient portion of the ac line cycle to provide a power factor of at least 0.9.

5. An ac/dc converter as claimed in claim 4, wherein the converter further comprises an output voltage control loop comprising means for dynamically comparing instantaneous output voltage with a target voltage to generate a control signal.

6. An ac/dc converter as claimed in claim 5, wherein the control loop comprises comparator compensation components ($R_1$, $R_2$, $C_1$) for scaling comparator differences such that the output voltage is restored to its regulated value within a time in the region of 0.2 to 1.0 ms.

7. An ac/dc converter as claimed in claims 5 and 6, wherein the control loop control signal adjusts the switching frequency of the half bridge inverter switches ($Q1$, $Q2$) in response to regulation and load change requirements.

8. An ac/dc converter as claimed in claim 7, wherein the control loop comprises means ($D_{Z1}$, $D_{Z2}$) for limiting the control signal within a range such that zero-voltage turn-on of the half bridge inverter switches is obtained.

9. An ac/dc converter as claimed in claim 6, wherein the control signal adjusts both the switching frequency and duty cycle of the half bridge inverter switches ($Q1$, $Q2$) in response to regulation and load change requirements.

Fig. 1  Circuit Diagram

Fig. 2  Converter Waveforms

Fig. 3: RCFMA Equivalent Circuit

Fig. 4: RCFMA equivalent circuit waveforms

Fig. 5: RCFMA equivalent circuit for unclamped mode of operation

Fig. 6: Converter output characteristics at $v_{IN}$=0V and $V_B$=325V.

Fig. 7: Variation in average output voltage over a half line cycle

Fig. 8: Small-signal model of the ac/dc converter

Fig. 9: Block diagram representation of control loop

Fig. 10 Output voltage ripple at full load, 230Vac (50mV/div; ac coupling; 4ms/div)

Fig. 11(a)          Fig. 11(b)

Output voltage transient response to step change in load current (a) 30A to 15A step (b)15A to 30A step, 400?s/div (10A/div; 100mV/div, ac coupling).

Fig. 12: Average output current variation with switching frequency

Fig. 13: RMS Inductor Current Variation with output current

Fig.14:  AC line current and voltage at 230Vac, full load.

Fig. 15:  Input current harmonics and Class A limits